# EUROPÄISCHE PATENTSCHRIFT

(11) **EP 3 697 944 B1**
(45) Veröffentlichungstag und Bekanntmachung des Hinweises auf die Patenterteilung: **12.07.2023**
(21) Anmeldenummer: 18782877.7
(22) Anmeldetag: 22.09.2018
(51) Int. Cl.: H01M 4/86, H01M 4/88, H01M 4/90, H01M 8/124, C25B 11/031, C25B 11/051, C25B 11/077, C25B 11/091, H01M 8/12

(54) **BRENNGASELEKTRODE SOWIE VERFAHREN ZUR HERSTELLUNG EINER BRENNGASELEKTRODE**
FUEL GAS ELECTRODE AND METHOD FOR PRODUCING A FUEL GAS ELECTRODE
ÉLECTRODE À GAZ COMBUSTIBLE AINSI QUE PROCÉDÉ DE FABRICATION D'UNE ÉLECTRODE À GAZ COMBUSTIBLE

(30) Priorität: 20.10.2017 DE 102017009786
(43) Veröffentlichungstag der Anmeldung: 26.08.2020
(73) Patentinhaber: Forschungszentrum Jülich GmbH, 52425 Jülich (DE)
(72) Erfinder: FREY, Carolin Elisabeth, 79194 Gindelfingen (DE); MENZLER, Norbert Heribert, 52428 Jülich (DE); GUILLON, Olivier, 52428 Jülich (DE)
(86) Internationale Anmeldenummer: PCT/DE2018/000271
(87) Internationale Veröffentlichungsnummer: WO 2019/076390

(56) Entgegenhaltungen:
- YE ET AL: "Use of a catalyst layer for anode-supported SOFCs running on ethanol fuel", JOURNAL OF POWER SOURCES, ELSEVIER SA, CH, Bd. 177, Nr. 2, 23. November 2007 (2007-11-23), Seiten 419-425, XP022450287, ISSN: 0378-7753
- ZHAO KAI ET AL: "Electrochemical performance of a copper-impregnated Ni-Ce0.8Sm0.2O1.9anode running on methane", INTERNATIONAL JOURNAL OF HYDROGEN ENERGY, ELSEVIER SCIENCE PUBLISHERS B.V., BARKING, GB, Bd. 38, Nr. 9, 5. Februar 2013 (2013-02-05), Seiten 3750-3756, XP028985898, ISSN: 0360-3199, DOI: 10.1016/J.IJHYDENE.2013.01.036 in der Anmeldung erwähnt
- FU X Z ET AL: "Surface modified Ni foam as current collector for syngas solid oxide fuel cells with perovskite anode catalyst", INTERNATIONAL JOURNAL OF HYDROGEN ENERGY, ELSEVIER SCIENCE PUBLISHERS B.V., BARKING, GB, Bd. 35, Nr. 20, 21. August 2010 (2010-08-21), Seiten 11180-11187, XP027367990, ISSN: 0360-3199 [gefunden am 2010-08-21]

## Beschreibung

Die Erfindung betrifft das Gebiet der Festoxid-Brennstoffzelle und Elektrolysezelle, und insbesondere eine Brenngaselektrode (Anode einer Brennstoffzelle oder Kathode einer Elektrolysezelle). Insbesondere betrifft die Erfindung ein neues Verfahren zur Herstellung einer solchen Brenngaselektrode.

### Stand der Technik

Aus der Literatur ist bekannt, dass Ni/YSZ-Cermets zu den am besten geeigneten und weit verbreiteten Anodenmaterialien für SOFC-Anwendungen zählen. Unter einem Cermet (zusammengesetzt aus engl. "cer"amic und "met"al) wird in der Regel ein Verbundwerkstoff aus keramischen Werkstoffen in einer metallischen Matrix (Bindemittel) verstanden. Der Vorteil eines Ni/YSZ-Cermets liegt in der Ausbildung von Netzwerken zwischen dem Nickel und dem YSZ, sodass sowohl eine gute ionische als auch eine gute elektronische Leitfähigkeit innerhalb der Elektrode vorliegt. Ferner weisen Ni/YSZ-Elektroden bekanntermaßen eine gute Leistung und eine sehr gute Lebensdauer auf. Darüber hinaus müssen sie über eine ausreichend hohe durchgängige Porosität verfügen. Gleichzeitig ist eine Vielzahl von Verfahren zur Herstellung solcher Brenngaselektroden bekannt.

Typische Elektrodenmaterialien für die Brenngasseite sind dotiertes Zirkoniumdioxid oder dotiertes Ceroxid, wie beispielsweise mit Yttrium oder Scandium dotiertes Zirkoniumdioxid (YSZ, ScSZ) oder mit Gadolinium oder Samarium dotiertes Ceroxid (CGO).

Einer der größten Nachteile, den die Nickel aufweisenden Elektroden bislang zeigen, ist - zumindest im Brennstoffzellenbetrieb - ihre Redox-Instabilität sowie ihre Neigung, bei Anwesenheit von Sulfiden und/oder Kohlenwasserstoffen durch Adsorption der entsprechenden Verunreinigungen vergiftet zu werden. Beispielsweise bildet Nickel in einer Brenngaselektrode einer Brennstoffzelle oberhalb von 700 °C mit Methan (CH₄) regelmäßig Kohlenstofffasern aus, die die anodischen Poren nachteilig vollständig ausfüllen oder auch zum Zerbrechen und damit zu einer teilweisen Dekontaktierung der Zellen führen können.

Als Alternative zu Ni/YSZ Cermets sind bereits Cu-YSZ Cermets als Anodenmaterialien getestet worden, da sie eine sehr gute elektronische Leitfähigkeit mit einer nur geringen katalytischen Oxidation von Kohlenwasserstoff verbinden ^{[1]}. Dadurch sollen insbesondere tiefere Betriebstemperaturen (700 bis 800 °C), wie sie beispielsweise bei IT-SOFC benötigt werden, ermöglicht werden. Durch den Ersatz von Nickel durch Kupfer könnte zudem die chemische Widerstandsfähigkeit erhöht werden, da die Umwandlung von Kupfer zu Kupferoxid bei einem deutlich höheren Sauerstoffpartialdruck erfolgt, als die Umwandlung von Nickel zu Nickeloxid. Damit würden Cu/YSZ-Cermets auch eine verbesserte Redox-Stabilität aufweisen.

Untersuchungen zur elektrischen Leitfähigkeit wurden auch bereits an symmetrischen Cu-CGO/CGO/Cu-CGO-Brennstoffzellen durchgeführt. Dazu wurden CuO - Ce_{0,9}Gd_{0,1}O_{1,95} (CuO-CGO) Pulver mit variierenden Anteilen an CuO von 40 bis 60 Gew.-% in einem Syntheseschritt hergestellt und bei 1150 °C gesintert. Die Anoden mit 40 bis 50 Gew.-% CuO zeigten sowohl mit Wasserstoff als auch mit Biogas die besten Ergebnisse ^{[2]}.

Ein weiterer Vorteil für den Ersatz von Nickel durch Kupfer ist, dass Kupfer deutlich weniger kostet als Nickel, und damit die Produktionskosten für eine Elektrode, bei der Nickel durch Kupfer ersetzt werden kann, insgesamt vorteilhaft gesenkt werden könnten. Erste Cu/YSZ-Folien, die über die Methode des Foliengießens aus wässrigen Suspensionen hergestellt wurden, zeigen eine für SOFC-Elektroden geeignete Schichtdicke von 200 bis 3000 mm und eine Porosität zwischen 43 und 45 Vol.-% ^{[1]}.

Neben der Option, das Nickel einer Ni-YSZ Elektrode vollständig durch Kupfer zu ersetzen, sind in der Literatur auch Untersuchungen zur teilweisen Substitution des Nickels durch Kupfer für eine anodengestützte IT-SOFC Brennstoffzelle durchgeführt worden ^{[3]}.

In Studien zur Vergiftung von Nickel-Kupfer-Legierungen zeigte sich, dass ein Gehalt von 10 Gew.-% Kupfer bereits zu einer deutlichen Verringerung der Verkokung führt und ab 20 Gew.-% Kupfer bezogen auf das eingesetzte Nickel eine Verkokung verhindert wird ^{[4]}.

Ferner zeigen Untersuchungen von Cu-Ni-Mischoxiden bei Anoden, umfassend Ni₁₋ₓCuₓO - SDC (Gewichtsverhältnis 60:40) für elektrolytgestützte IT-SOFC, die bei 1000 °C gesintert wurden, eine deutliche Verbesserung der elektrischen Leitfähigkeit für einen Kupferanteil x = 0,1^{[5,6]}.

Bekannt sind auch Verfahren zu Herstellung von bimetallischen Ni-Cu Anoden durch elektronische Abscheidung von Kupfer auf Nickel oder durch elektrodenloses Platinieren einer Ni-YSZ-Elektrode mit Kupfer ^{[7,8]}.

Als eine weitere vielversprechende Methode, ein herkömmliches Elektrodenmaterial einer SOFC zu modifizieren, um einerseits die so genannte 3-Phasengrenze zu verbessern und/oder um einen Katalysator hinzuzufügen, hat sich die Nass-Imprägnation herausgestellt. Diese Imprägnation ist zudem eine geeignete Methode, um nachträglich neue Materialien in eine Elektrode einzubringen, die selbst keinen hohen Sintertemperaturen ausgesetzt werden dürfen, da sie selbst einen nur geringen Schmelzpunkt oder eine nur geringe thermische Stabilität in Bezug auf die übrigen Zellkomponenten aufweisen. Die Imprägnationsmethode wird daher als ein vielversprechendes Verfahren für die Modifikation von bereits gesinterten Elektroden für SOFCs angesehen.

So ist beispielsweise das Vorgehen bekannt, die Anode einer SOFC-Zelle mehrmals mit einer wässrigen Lösung von Kupfernitrat zu infiltrieren. Zwischen den einzelnen Infiltrationsschritten wird die Zelle regelmäßig bei erhöhter Temperatur getrocknet. ^{[9]}

Häufig ist ein abschließender Sinterschritt nötig, um die Nitrate vollständig zu verbrennen. Solche Untersuchungen wurden bereits sowohl für Ni/SDC-Elektroden durchgeführt, die mit Kupfer-Nanopartikel imprägniert wurden, als auch für Ni/YSZ-Elektroden, die mit Cu-Cer imprägniert wurden.

Allerdings sind bei dieser Methode in der Regel mehrere Imprägnierungsschritte vorgesehen, zwischen denen jeweils ein Trocknungsschritt bei höheren Temperaturen vorgesehen ist, so dass dieses Verfahren relativ zeit- und energieintensiv ist.

Ferner ist bekannt, dass Kupfer im oxidischen Zustand und bei hohen Temperaturen eine sehr hohe Mobilität aufweist, wodurch regelmäßig eine starke Diffusion durch die Zelle eintritt.

Alternativ kann man auch von einer metallischen CuNi-Legierung für die Anodenherstellung ausgehen. Dann müssten aber alle anschließenden Hochtemperatur-Verfahrensschritte entweder unter Schutzgas oder im Vakuum durchgeführt werden. Dies ist im Prinzip zwar möglich, aber ebenfalls sehr aufwändig. Zudem kann die Luftelektrode nachteilig nicht unter reduzierenden Bedingungen gesintert werden, da sie sich sonst zersetzt.

Des Weiteren ist ein Verfahren zur Herstellung von Ni-Cu/YSZ-Cermets für den Einsatz in SOFCs bekannt, bei dem zunächst elektrodenlos ein Cu/YSZ-Cermet sowie ein Ni-YSZ-Cermet hergestellt und die beiden Pulver anschließend in einem Ni:Cu-Verhältnis von 90:10 in dem bimetallischen Cermet vermischt wurden. Die Pulvermischung wurde anschließend vermahlen und bei T = 900 °C unter einer kontrollierten reduzierenden Atmosphäre (Ar + H₂ (95:5)) für 2 Stunden wärmebehandelt, wodurch sich einerseits ein keramischer Teil aus YSZ sowie ein metallischer Teil umfassend Nickel und Kupfer ausbildete ^{[10]}.

### Aufgabe und Lösung

Die objektive Aufgabe der Erfindung ist es, eine neue Brenngaselektrode für den Einsatz in einer Brennstoffzelle oder einer Elektrolysezelle sowohl für den mittleren als auch den hohen Temperaturbereich bereitzustellen, die in Anwesenheit von Schwefelverbindungen und/oder Kohlenwasserstoffen eine gegenüber dem Stand der Technik verringerte Neigung zur Adsorption dieser Verunreinigungen aufweist, und somit langlebiger als bisherige Brenngaselektroden ist.

Die Aufgabe der Erfindung ist es ferner, ein alternatives und einfaches Verfahren zur Herstellung einer solchen neuen Brenngaselektrode für den Einsatz in einer Brennstoffzelle oder einer Elektrolysezelle für den mittleren oder auch den hohen Temperaturbereich bereitzustellen.

Die Aufgaben der Erfindung werden gelöst durch ein Verfahren zur Herstellung einer Brenngaselektrode mit den Merkmalen des Hauptanspruchs, sowie durch eine Brenngaselektrode gemäß Nebenanspruch.

Vorteilhafte Ausgestaltungen des Verfahrens sowie der Brenngaselektrode ergeben sich aus den jeweils darauf rückbezogenen Ansprüchen.

### Gegenstand der Erfindung

Im Rahmen der Erfindung wurde herausgefunden, dass es möglich ist, auf verfahrenstechnisch einfachem Weg Kupferoxid in das Nickeloxid einer herkömmlichen nickelhaltigen Elektrode eindiffundierten zu lassen, um dadurch eine deutliche Leistungsverbesserung einer elektrochemischen Zelle in Bezug auf Vergiftungserscheinungen durch Schwefelverbindungen und/oder Kohlenwasserstoffe in einem Brenngas zu erzielen.

Mit dem erfindungsgemäßen Verfahren ist es daher möglich, herkömmliche nickelhaltige Elektroden, wie sie bislang für Hochtemperatur-Brennstoffzellen (SOFC) oder Hochtemperatur-Elektrolysezellen (SOEC) eingesetzt werden, derart zu modifizieren, dass die negativen Auswirkung durch Vergiftungserscheinungen deutlich verringert oder sogar verhindert werden können.

Mit Rücksicht darauf, dass die nachfolgend vorgestellten Elektroden sowohl als Anode in einer Brennstoffzelle als auch als Kathode in einer Elektrolysezelle eingesetzt werden können, wird nachfolgend vereinfacht nur noch von einer Brenngaselektrode gesprochen, die als Nickel aufweisende Brenngaselektrode zudem sowohl für Hochtemperatureinsätze als auch bei mittleren Temperaturen Anwendung finden kann, und bei der bislang typischerweise das Problem einer Vergiftung durch Schwefel und/oder Kohlenstoff auftritt.

Erfindungsgemäß wird dazu vorgeschlagen, auf die Oberfläche einer nickelhaltigen Brenngaselektrode eine Schicht umfassend Kupfer aufzubringen und anschließend einer Wärmebehandlung (Sinterschritt) zu unterziehen. Dabei diffundiert das Kupfer zumindest teilweise in die nickelhaltige Elektrode ein. Wichtig und entscheidend dabei ist, dass das Kupfer in der Regel als Kupferoxid nicht in den lonenleiter der Elektrode eindiffundiert, sondern ausschließlich in den Bereichen zu finden ist, wo auch Nickel vorhanden ist.

Im Rahmen dieser Erfindung wird der Begriff Substrat verwendet, wenn ein poröser Elektrodenträger gemeint ist, der neben einem keramischen Oxidionenleiter auch Nickel bzw. Nickeloxid aufweist. Als Oxidionenleiter kommen alle gängigen Anodensubstratmaterialien in Frage, wie beispielsweise Zirkoniumdioxid, mit Yttrium stabilisiertes Zirkoniumdioxid (YSZ), insbesondere 3YSZ (mit 3 Mol% Yttrium stabilisiertes Zirkoniumdioxid) oder auch 8YSZ (mit 8 Mol% Yttrium stabilisiertes Zirkoniumdioxid), ferner mit Scandium stabilisiertes Zirkoniumdioxid (ScSZ), Ceroxid sowie dotiertes Ceroxid, insbesondere mit Gadolinium (GDC) bzw. mit Samarium oder Praseodym dotiertes Ceroxid (SDC, PDC)).

Die Porosität eines solchen reduziert vorliegenden Substrates liegt dabei regelmäßig um die 35 Vol.-%.

Weiterhin wird im Rahmen dieser Erfindung unter einer Elektrode der elektrochemisch aktive Bereich einer Brenngaselektrode verstanden, der häufig bei substratgestützten Zellen auch als Elektrodenschicht bezeichnet wird und neben einem keramischen Oxidionenleiter regelmäßig auch Nickel bzw. Nickeloxid als Elektronenleiter und gleichzeitig als Katalysator aufweist. Im Zusammenhang mit einem Substrat wird bei einer Elektrode häufig auch von einer Elektrodenfunktionsschicht gesprochen.

Die Porosität einer Elektrode bzw. Elektrodenfunktionsschicht ist typischerweise deutlich geringer als die eines Substrates und liegt im reduzierten Zustand regelmäßig bei ca. 20 Vol.-%.

Die kupferhaltige Schicht kann erfindungsgemäß sowohl metallisches Kupfer, einwertiges Kupferoxid (Cu₂O) und/oder auch zweiwertiges Kupferoxid (CuO) umfassen.

Da in der Regel bei den Brenngaselektroden und bei deren Herstellung oxidierende Bedingungen vorherrschen, wird nachfolgend der Einfachheit halber von Kupferoxid (für Kupfer und Kupferoxid) und Nickeloxid (für Nickel und Nickeloxid) gesprochen, wobei diese in reduzierenden Bedingungen jeweils als metallisches Kupfer oder Nickel vorliegen.

Das erfindungsgemäße Verfahren ist dabei insbesondere für die Herstellung von Elektroden über die sogenannte elektrodengestützte Verfahrensroute geeignet. Bei der elektrodengestützten Herstellungsroute für elektrochemische Zellen wird zunächst auf einem relativ dicken, porösen und mechanisch stabilen Elektrodensubtrat als Trägerschicht eine dünne Elektrodenschicht als eigentliche Elektrode aufgebracht. Diese wird direkt bei relativ hohen Sintertemperaturen oberhalb von 900 °C, typischerweise bis maximal 1450 °C gesintert, besonders vorteilhaft bei ca. 1000 °C.

Es hat sich herausgestellt, dass sich während der erfindungsgemäßen Herstellung der Brenngaselektrode, d. h. während des Eindiffundierens von Kupferoxid aus der kupferhaltigen Schicht in das Nickeloxid einer Brenngaselektrode ein Gradient bezüglich des Kupfergehaltes ausbildet, so dass sich an der Oberfläche der Brenngaselektrode mehr und in Richtung auf das Substrat weniger Kupfer befindet. Es wird aber vermutet, dass nach längerer Betriebsweise, dieser Gradient nach und nach zu einer ausgeglichenen Verteilung des Kupferoxids im Nickeloxid der Brenngaselektrode führt.

Das erfindungsgemäße Verfahren zur Herstellung einer Kupfer aufweisenden nickelhaltigen Elektrode sieht vor, auf eine nickelhaltige Elektrode, eine weitere Schicht umfassend Kupfer aufzubringen. Die Elektrodenschicht umfasst dabei regelmäßig neben einem Elektrodenmatrixmaterial (als Oxidionenleiter) auch noch Nickel bzw. Nickeloxid als Katalysator und Elektronenleiter. Es handelt sich somit insbesondere um die Herstellung einer elektrodengestützten Elektrode.

Typische Schichtdicken für das Elektrodensubtrat liegen zwischen 150 und 1500 µm, vorzugsweise zwischen 200 und 1000 µm. Die darauf angeordnete Elektrodenschicht, d. h. die eigentliche Brenngaselektrode, weist typischerweise Schichtdicken zwischen 2 und 20 µm, vorzugsweise zwischen 5 und 10 µm auf.

Sowohl die Aufbringung der Elektrodenschicht auf den Träger als auch die Aufbringung der kupferhaltigen Schicht auf die Elektrodenschicht kann insbesondere über alle bislang bekannten Aufbringungsverfahren, wie beispielsweise Siebdruck, Rollbeschichten, Tampondruck, Vorhangbeschichten, Nasspulverspritzen (WPS) oder Vakuumschlickerguss (VSG) erfolgen.

Die Schichtdicken dieser kupferhaltigen Schicht liegen dabei zwischen 1 und 50 µm, vorzugsweise zwischen 3 und 30 µm.

Die kupferhaltige Schicht kann vorteilhaft sowohl ein- als auch zweiwertiges Kupferoxid aufweisen. Auch metallisches Kupfer wäre denkbar, würde sich in Anwesenheit einer sauerstoffhaltigen Atmosphäre bei erhöhter Temperatur aber zumindest teilweise in Kupferoxid umwandeln.

Zusätzlich kann diese kupferhaltige Schicht neben Kupfer auch noch Nickel, bzw. Nickeloxid umfassen. Ebenso kann diese weitere Schicht neben Kupfer auch noch einen Oxidionenleiter, wie beispielsweise dotiertes oder undotiertes Zirkoniumdioxid oder dotiertes oder undotiertes Ceroxid aufweisen.

Nach dem Aufbringen der kupferhaltigen Schicht auf die Elektrodenschicht erfolgt eine Wärmebehandlung. Insbesondere erfolgt ein Sinterschritt bei Temperaturen oberhalb von 900 °C. Eine maximale Sintertemperatur von 1450 °C sollte jedoch nicht überschritten werden. Der bevorzugte Temperaturbereich liegt entsprechend zwischen 1000 und 1200 °C.

Die Wärmebehandlung bzw. der Sinterschritt kann direkt im Anschluss an die Aufbringung der weiteren kupferhaltigen Schicht erfolgen.

Optional kann aber zunächst auch noch eine Elektrolytschicht auf die kupferhaltige Schicht aufgebracht werden und im Anschluss daran die gesamte Schichtenfolge aus Elektrodensubstrat, Elektrodenschicht, kupferhaltiger Schicht und Elektrolytschicht gesintert werden. Vorteilhafte Temperaturen dafür liegen hierbei zwischen 1100 und 1500 °C, insbesondere zwischen 1200 und 1400 °C.

Während der Sinterung diffundiert das Kupfer aus der kupferhaltigen Schicht in der Regel als Kupferoxid zumindest teilweise in das Nickeloxid der Elektrodenschicht ein. Vorteilhaft erfolgt die Diffusion des Kupferoxids dabei jedoch weder in die gegebenenfalls benachbarte Elektrolytschicht noch in das Elektrodenmatrixmaterial (Oxidionenleiter) des Elektrodensubstrates.

Durch eine entsprechend ausgewählte Schichtdicke der kupferhaltigen Schicht kann somit sichergestellt werden, dass nach der Wärmebehandlung ausreichend viel Kupfer, vorzugsweise zwischen 5 und 25 Gew.-% bezogen auf den Nickelgehalt, in der Elektrodenschicht vorliegt, um den gewünschten Effekt zu gewährleisten.

Ein besonderer Vorteil des erfindungsgemäßen Verfahrens ist es, dass die bisher verwendeten und optimierten Prozesse zur Herstellung einer Elektrodenschicht auf einem Elektrodensubstrat, wie sie beispielsweise für die Herstellung einer anodengestützten Brennstoffzelle bereits bekannt sind, beibehalten werden können und lediglich um den Schritt des Aufbringens einer kupferhaltigen Schicht erweitert werden müssen. Eventuell ist kein zusätzlicher Wärmebehandlungsschritt nötig.

Zudem wird das zusätzlich eingesetzte Kupfer auf diese Weise im Wesentlichen an der Oberfläche der Elektrodenschicht zur benachbarten Elektrolytschicht eingebaut, wo es seine größte Wirksamkeit entfalten kann, und verteilt sich nicht sofort in der gesamten Elektrode oder in dem Elektrodensubstrat.

Der bisherigen Stand der Technik, wo häufig klassisch ein Cu-haltiges Nitrat in die Anode bzw. das Substrat infiltriert wird, weist einerseits den Nachteil auf, dass mehrmals infiltriert werden muss, um die ausreichende Menge zu erhalten, und zudem diverse Kalzinierungsschritte notwendig sind. Ferner werden bei den bislang üblichen Verfahren in der Regel immer beide Schichten (Substrat und Anode) infiltriert, da "über" der Elektrode der dichte Elektrolyt liegt und man sozusagen von der Rückseite infiltriert. Demgegenüber sieht die das erfindungsgemäße Verfahren einen völlig anderen Ansatz vor. Hier werden auf eine substratgestützte Elektrode eine Kupfer-haltige Schicht und darauf der Elektrolyt aufgebracht. Es wird kein Kupfer infiltrieret, sondern das aufgebrachte Kupfer diffundiert thermisch aktiviert, eigenständig in die benachbarte Elektrode hinein. Eine Diffusion des Kupfers auch in das Substrat kann zwar nicht verhindert werden, aber der Diffusionsweg zur Elektrode ist wesentlich kürzer als der zum Substrat.

Die erfindungsgemäß hergestellten Brenngaselektroden können sowohl in Brennstoffzellen als auch in Elektrolysezellen Verwendung finden. Der Einsatzbereich dieser Brenngaselektroden ist zudem auch nicht nur auf Hochtemperaturanwendungen, wie beispielsweise bei der SOFC oder der SOEC beschränkt. Diese Brenngaselektroden können ebenfalls im mittleren Temperaturbereich eingesetzt werden, wie sie beispielsweise für IT-Brennstoffzellen vorgesehen sind.

Durch die erfindungsgemäße Herstellungsweise weist die substratgestützte Brenngaselektrode - anders als bei Infiltrationsmethoden - einen Gradienten bezüglich des Kupfers auf, und zwar dergestalt, dass der Kupfergehalt innerhalb der Elektrodenschicht, in dem Bereich, der für den Kontakt mit dem Elektrolyten vorgesehen ist, höher ist, als in dem Bereich, der an das Elektrodensubstrat grenzt. Dieser Gradient kann allerdings im Betrieb der Brenngaselektrode bei hohen Betriebstemperaturen mit der Zeit immer geringer ausfallen.

### Spezieller Beschreibungsteil

Im Weiteren wird die Erfindung anhand von Ausführungsbeispielen näher erläutert, ohne dass dies zu einer Einschränkung des breiten Schutzumfanges führen soll.

### 1. Beispiel

Auf einen Brenngaselektrodenträger (Substrat) umfassend NiO/8YSZ wurde mittels Siebdruck eine -10 µm dicke Schicht aus einem Anodenschlicker aus einem Mischoxid und 8YSZ in einem Massenverhältnis von 1:1 aufgetragen.

Das Mischoxid umfasste jeweils zweiwertiges Kupferoxid (CuO) und Nickeloxid (NiO). Es wurden unterschiedliche Molverhältnisse von CuO und NiO für das Mischoxid eingesetzt, in den Molverhältnissen von 1:9, 1:4 und 1:1 (CuO:NiO). Dazu wurde zunächst Kupferoxid (CuO) und Nickeloxid (NiO) in entsprechenden Molverhältnissen eingewogen, innig gemörsert und jeweils bei 900 °C gesintert. Nach diesem Temperaturschritt wurde das jeweilige Mischoxid erneut gemörsert.

Aus den jeweiligen Mischoxiden und 8YSZ wurden jeweils Elektrodenpasten im Massenverhältnis von 1:1 hergestellt. Diese wurden jeweils mittels Siebdruck auf ein Anodensubstratmaterial in Form von NiO/8YSZ aufgebracht. Die Schichtsysteme wurden jeweils für 2 Stunden bei ca. 60 °C getrocknet und anschließend bei 1000 °C unter Luft für eine Stunde gesintert.

Auf diese Schichtsysteme wurde anschließend mittels Siebdruck jeweils eine Elektrolytschicht umfassend 8YSZ aufgebracht und die so erhaltenen Halbzellen jeweils 5 h unter Luft bei 1400 °C im Ofen gesintert.

Im Anschluss wurden Schliffe dieser Halbzellen unter dem Rasterelektronenmikroskop (REM) und mit Hilfe der Energiedispersiven Röntgenspektroskopie (engl. energy dispersive X-ray spectroscopy, EDX) untersucht. In keinen Fall konnte Kupfer in der ehemaligen kupferhaltigen Schicht nachgewiesen werden, da es unterhalb der Nachweisgrenze lag, die bei ca. 1 Gew.-% liegt.

Der Einsatz von Cu-Ni-Mischoxiden in einer Anodenschicht führt bei anodengestützten Brennstoffzellen insofern regelmäßig zu einer Verteilung des Kupferoxides im kompletten Anodensubstrat. Dadurch kann der für eine Anodenschicht angestrebte 10 - 20 Gew.-% Anteil an Kupfer bezogen auf den Nickelanteil auf diese Weise häufig nicht erreicht bzw. erhalten werden, da das Anodensubstrat typischerweise ein wesentlich größeres Volumen als die Anodenschicht aufweist.

Als eine weitere Möglichkeit der Verbesserung von Elektroden für elektrolytgestützten SOFC wird vorgeschlagen, ein Kupfernickeloxid vor dem Aufbringen auf die Zelle herzustellen. Das Mischoxid kann dann beispielsweise wie reines Nickeloxid zusammen mit verdruckt und das bisherige Verfahren zu Herstellung von elektrolytgestützten SOFCs angewendet werden.

### 2. Beispiel

In einem Test zur Untersuchung der Einbringung von Kupferoxid in das Nickeloxid einer SOFC-Elektrode wurden in einem weiteren Experiment zweiphasige Tabletten mit einem Durchmesser von ca. 22 mm jeweils für 1 Minute bei 10 bar verpresst.

Der untere Teil der Tabletten umfasste jeweils NiO/8YSZ im Massenverhältnis von 1:1, und sollte eine typische Elektrodenfunktionsschicht simulieren.

Der obere Teil dieser Tabletten bestand jeweils aus einem Mischoxid und 8YSZ in einem Massenverhältnis von 1:1. Das Mischoxid umfasste zweiwertiges Kupferoxid (CuO) und Nickeloxid (NiO) im Massenverhältnis 1:4. Dazu wurde zunächst Kupferoxid (CuO) und Nickeloxid (NiO) in entsprechenden Molverhältnissen eingewogen, innig gemörsert und jeweils bei 900 °C gesintert. Nach diesem Temperaturschritt wurde das jeweilige Mischoxid erneut gemörsert.

Die Tabletten wurden zweiphasig verpresst und jeweils für 5 Stunden bei ca. 60 °C getrocknet und anschließend bei 1400 °C unter Luft für eine Stunde gesintert.

Die resultierenden Schichtdicken lagen nach dem Sinterschritt bei ca. 300 mm für die obere kupferhaltige und bei ca. 130 mm für die untere kupferfreie Schicht.

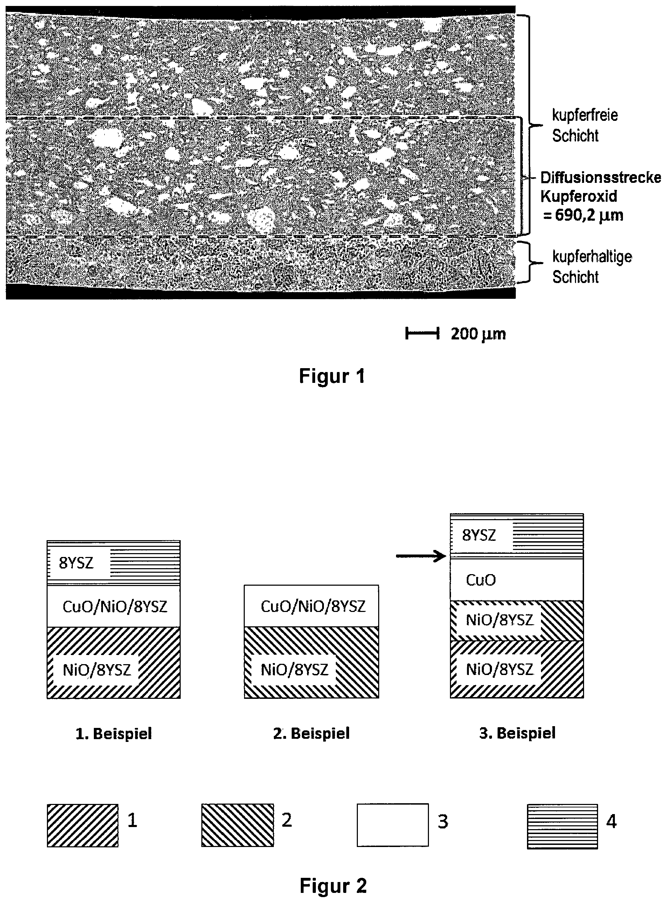

Es wurden EDX Untersuchungen an den Schliffen der Tabletten durchgeführt. Die Figur 1 zeigt einen typischen Schnitt durch die Tablette nach dem Sinterschritt. Die Darstellung zeigt die Tablette jedoch auf dem Kopf. Auf der rechten Seite sind die Grenzen für die ursprüngliche kupferfreie Schicht (unterer Teil der Tablette) und der darauf aufgebrachten kupferhaltigen Schicht (oberer Teil der Tablette) dargestellt. Ebenfalls dargestellt ist die Grenze, bis zu der nach der Sinterung noch Kupfer nachgewiesen werden konnte (Diffusionsstrecke Kupferoxid in der ursprünglich kupferfreien Schicht).

In dem Experiment mit anfänglich 20 Gew.-% CuO in der oberen Tablettenschicht konnten nur noch ca. 10 Gew.-% im Verhältnis zum NiO wiedergefunden werden (50 Gew.-% des Ausgangswertes), während die andere Hälfte des Kupferoxides mehrere 100 µm weit in den unteren Teil der Tablette eindiffundiert war. Dabei lag der Verteilung in dem unteren Teil der Tablette ein Gradient zu Grunde. Das Kupferoxid befand sich jedoch ausschließlich in den Bereichen des Substrates, wo Nickeloxid vorlag. Im 8YSZ konnte kein Kupfer nachgewiesen werden.

### 3. Beispiel

Auf einen Brenngaselektrodenträger (Substrat) umfassend NiO/8YSZ und einer darauf angeordneten Elektrodenschicht aus NiO/8YSZ wurde mittels Vakuumschlickerguss eine dünne CuO-Schicht aufgetragen. Auf diese Schicht wurde anschließend mittels Siebdruck eine Elektrolytschicht umfassend 8YSZ aufgebracht und die Halbzelle ca. 5 h bei 1400 °C unter Luft im Ofen gesintert.

Die nach dem gemeinsamen Sinterschritt ermittelten Schichtdicken lagen bei 6 bis 9 µm für die Elektrodenschicht, bei 3 bis 5 µm für die kupferhaltige Schicht und bei ca. 10 µm für die Elektrolytschicht.

Es stellte sich heraus, dass sich der Elektrolyt von der Elektrodenschicht gelöst hatte. Als Grund für diese Dekontaktierung ist vermutlich eine Volumenverringerung der CuO-Schicht verantwortlich, die durch die Diffusion des CuO in das NiO des Trägersubstrates verursacht wurde. Die zunächst aufgebrachte CuO-Schicht verschwindet durch die Diffusion in die Brenngaselektrode bzw. sinkt vollständig in diese ein.

Mittels EDX wurde der Kupfer-Nickel-Gehalt bestimmt. Das Kupferoxid konnte durch das komplette Elektrodensubstrat (ca. 500 µm) in einem Gew.-Verhältnis von ca. 1 bis 2 % zum Nickeloxid nachgewiesen werden.

Erfindungsgemäß kann eine solche Dekontaktierung dadurch verhindert werden, dass nach der Aufbringung der kupferhaltigen Schicht auf die Elektrodenschicht zunächst eine Wärmebehandlung durchzuführen ist, bevor ein Elektrolyt aufgebracht wird und/oder die kupferhaltige Schicht zusätzlich einen lonenleiter umfasst.

Die Probenzusammensetzungen für die Beispiele 1 bis 3 vor der jeweiligen Sinterung sind schematisch in der Figur 2 dargestellt, mit 1 = Elektrodensubstrat, 2 = Elektrode bzw. Elektrodenfunktionsschicht, 3 = kupferhaltige Schicht und 4 = Elektrolyt.

In dieser Anmeldung zitierte Literatur:
^{[1]} A. R. O. Sousa, A. J. M. Araujo, G. S. Souza, J. P. F. Grilo, F. J. A. Loureiro, D. P. Fagg, D. A. Macedo, Materials Letters 2017, 191, 141-144.
^{[2]} article in press: Diana M. Amaya, Daniel Estrada, Dachamir Hotza, Joäo B. Rodrigues Neto,Jairo A. Escobar, " Porous Cu/YSZ anodes processed by aqueous tape casting for IT-SOFC", Journal of the European Ceramic Society (2017), http://dx.doi.org/10.1016/j.jeurceramsoc.2017.05.002.
^{[3]} Z. Wang, S. Wang, S. Jiao, W. Weng, K. Cheng, B. Qian, H. Yu, Y. Chao, J. Alloys Compd. 2017, 702, 186 - 192.
^{[4]} Nishiyama, Y.; Otsuka, N., "The Role of Copper in Resisting Metal Dusting of Ni-Base Alloys", Mater. Sci. Forum, 522-523, 581-588 (2006).
^{[5]} L. Zhu, X. Liu, F. Han, J. Sun, H. Bi, H. Wang, S. Yu, L. Pei, Solid State Ionics 2016, 288, 115 - 119.
^{[6]} M. Miyake, S. Matsumoto, M. Iwami, S. Nishimoto, Y. Kameshima, Int. J. Hydrogen Energy 2016, 41, 13625 - 13631.
^{[7]} H. Kim, C. Lu, W. L. Worrell, J. M. Vohs, R. J. Gorte, "Cu-Ni cermet anodes for direct oxidation of methane in solid-oxide fuel cells", Journal of the Electrochemical Society (2002), Vol. 149(3), A247 - 250.
^{[8]} S. P. S. Shaikh, S. V. Moharil, B. S. Nagrare, "A comparative study of copper-cermet anode material synthesized by different technique", International Journal of Hydrogen Energy (2012), Vol. 37(8), 6853 - 6861.
^{[9]} Zhao, K.; Lee, K.-S.; Chen, M,; Kim, B.-H.; Xu, Q.; Ahn, B.-G.: "Electrochemical performance of a copper-impregnated Ni-Ce0.8Sm0.2O1.9 anode running on methane", International Journal of Hydrogen Energy, Vol. 38, 2013, 3750 - 3756.
^{[10]} R. Konar, J. Mukhopadhyay, A. Das Sharma, R. N. Basu, "Synthesis of Cu-YSZ and Ni-Cu-YSZ cermets by a novel electroless technique for use as solid oxide fuel cell anode: Application potentiality towards fuel flexibility in biogas atmosphere", International Journal of Hydrogen Energy (2016), Vol. 41, 1151 - 1160.

## Patentansprüche

1. Verfahren zur Herstellung einer Brenngaselektrode,
umfassend ein Elektrodensubstrat sowie eine darauf angeordnete Elektrodenschicht, *mit den Schritten:*
- auf die auf einem Elektrodensubstrat angeordnete Elektrodenschicht, umfassend Nickel, wird eine kupferhaltige Schicht aufgebracht,
- der Schichtverbund wird einer Wärmebehandlung von mehr als 900 °C unterzogen, wobei Kupfer aus der kupferhaltigen Schicht zumindest teilweise in das Nickel der Elektrodenschicht diffundiert.

2. Verfahren nach Anspruch 1,
bei dem ein Elektrodensubstrat oder eine Elektrodenschicht, umfassend dotiertes oder undotiertes Zirkoniumdioxid oder dotiertes oder undotiertes Ceroxid, eingesetzt wird.

3. Verfahren nach einem der Ansprüche 1 bis 2,
bei dem die kupferhaltige Schicht mit einer Schichtdicke von 3 bis 50 µm, insbesondere mit einer Schichtdicke von 5 bis 30 µm, auf die Elektrodenschicht aufgebracht wird.

4. Verfahren nach einem der Ansprüche 1 bis 3,
bei dem die kupferhaltige Schicht, umfassend elementares Kupfer, 1-wertiges Kupferoxid oder 2-wertiges Kupferoxid, aufgebracht wird.

5. Verfahren nach einem der Ansprüche 1 bis 4,
bei dem der Schichtverbund einer Wärmebehandlung von mehr als 900 °C, aber weniger als 1400 °C unterzogen wird, vorteilhaft einer Wärmebehandlung zwischen 1000 °C und 1200 °C.

6. Verfahren nach einem der Ansprüche 1 bis 5,
bei dem die Wärmebehandlung unter Luft durchgeführt wird.

7. Verfahren nach einem der Ansprüche 1 bis 6,
bei dem die kupferhaltige Schicht, umfassend zusätzlich einen lonenleiter mit einem Masseanteil von maximal 95 Gew.-%, vorzugsweise zwischen 5 und 50 Gew.-%, aufgebracht wird.

8. Verfahren nach einem der Ansprüche 1 bis 7,
bei dem vor der Wärmebehandlung zusätzlich noch eine Elektrolytschicht auf die kupferhaltige Schicht aufgebracht wird.

9. Substratgestützte Brenngaselektrode,
herstellbar nach einem der Ansprüche 1 bis 8,
umfassend ein Elektrodensubstrat sowie eine darauf angeordnete Elektrodenschicht, wobei die Elektrodenschicht einen lonenleiter sowie Nickeloxid aufweist,
**dadurch gekennzeichnet,**
- **dass** zumindest die Elektrodenschicht zusätzlich Kupferoxid mit einem Gehalt von wenigstens 2 Gew.-% aufweist und
- **dass** das Kupferoxid als Gradient in der Elektrodenschicht vorliegt.

## Claims

1. A method for producing a fuel gas electrode,
comprising an electrode substrate and an electrode layer disposed thereon, *comprising the steps of:*
- applying a copper-containing layer onto the electrode layer, which comprises nickel, arranged on an electrode substrate,
- subjecting the layer composite to a heat treatment of more than 900 °C, wherein copper from the copper-containing layer diffuses at least partially into the nickel of the electrode layer.

2. The method according to claim 1,
wherein an electrode substrate or an electrode layer comprising doped or undoped zirconium dioxide or doped or undoped cerium oxide is used.

3. The method according to any one of claims 1 to 2,
wherein the copper-containing layer is applied to the electrode layer with a layer thickness of 3 to 50 µm, in particular with a layer thickness of 5 to 30 µm.

4. The method according to any one of claims 1 to 3,
wherein the copper-containing layer comprising elemental copper, 1-valent copper oxide or 2-valent copper oxide is applied.

5. The method according to any one of claims 1 to 4,
wherein the layer composite is subjected to a heat treatment of more than 900 °C, but less than 1400 °C, advantageously a heat treatment between 1000 °C and 1200 °C.

6. The method according to any one of claims 1 to 5,
wherein the heat treatment is performed under air.

7. The method according to any one of claims 1 to 6,
wherein the copper-containing layer, additionally comprising an ion conductor with a mass fraction of at most 95% by weight, preferably between 5 and 50% by weight, is applied.

8. The method according to any one of claims 1 to 7,
wherein an electrolyte layer is additionally applied onto the copper-containing layer before heat treatment.

9. A substrate-supported fuel gas electrode,
producible according to any one of claims 1 to 8,
comprising an electrode substrate and an electrode layer disposed thereon, the electrode layer having an ion conductor and nickel oxide,
**characterized in that**
- at least the electrode layer additionally comprises copper oxide with a content of at least 2% by weight, and
- the copper oxide is present as a gradient in the electrode layer.

## Revendications

1. Procédé de production d'une électrode à combustible gazeux,
comprenant un substrat d'électrode, sur lequel est disposée une couche d'électrode,
comprenant les stades :
- on dépose sur la couche d'électrode, disposée sur le substrat d'électrode et comprenant du nickel, une couche contenant du cuivre,
- on soumet le composite de couche à un traitement thermique à plus de 900°C, du cuivre diffusant de la couche contenant du cuivre au moins en partie dans le nickel de la couche d'électrode.

2. Procédé suivant la revendication 1,
dans lequel on utilise un substrat d'électrode ou une couche d'électrode comprenant du dioxyde de zirconium dopé ou non dopé ou de l'oxyde de cérium dopé ou non dopé.

3. Procédé suivant l'une des revendications 1 à 2,
dans lequel on dépose sur la couche d'électrode la couche contenant du cuivre en une épaisseur de couche de 3 à 50 µm, en particulier en une épaisseur de couche de 5 à 30 µm.

4. Procédé suivant l'une des revendications 1 à 3,
dans lequel on dépose la couche contenant du cuivre comprenant du cuivre élémentaire, de l'oxyde de cuivre monovalent ou de l'oxyde de cuivre divalent.

5. Procédé suivant l'une des revendications 1 à 4,
dans lequel on soumet le composite de couche à un traitement thermique à plus de 900°C, mais à moins de 1400°C, en le soumettant, de préférence, à un traitement thermique entre 1000°C et 1200°C.

6. Procédé suivant l'une des revendications 1 à 5,
dans lequel on effectue le traitement thermique sous air.

7. Procédé suivant l'une des revendications 1 à 6,
dans lequel on dépose la couche contenant du cuivre contenant en outre un conducteur d'ions en une proportion en masse de 95% en poids en maximum, comprise de préférence entre 5 et 50% en poids.

8. Procédé suivant l'une des revendications 1 à 7,
dans lequel on dépose, avant le traitement thermique, en outre encore une couche d'électrolyte sur la couche contenant du cuivre.

9. Electrode à combustible gazeux supportée par un substrat, pouvant être produite suivant l'une des revendications 1 à 8, comprenant un substrat d'électrode, sur lequel est disposée une couche d'électrode, la couche d'électrode comprenant un conducteur d'ion, ainsi que de l'oxyde de nickel,
**caractérisée**
- **en ce qu'**au moins la couche d'électrode comporte supplémentairement de l'oxyde de cuivre en une teneur d'au moins 2% en poids et
- **en ce que** l'oxyde de cuivre se présente sous la forme d'un gradient dans la couche d'électrode.
